# EUROPEAN PATENT APPLICATION

(11) **EP 1 154 360 A1**
(43) Date of publication of application: **14.11.2001**
(21) Application number: 00303910.4
(22) Date of filing: 10.05.2000
(51) Int. Cl.: G06F 17/60

(54) **Method and system for matching information items with search criteria**

(71) Applicant: Search.Com PLC, Brighton (GB)
(72) Inventor: Crowther, Paul, Tunbridge Wells, Kent, TN1 (GB)
(74) Representative: Skone James, Robert Edmund

(57) **Abstract**

A method and system for matching information items supplied by providers (5,6) to a remote database (1) with search criteria supplied by remote searchers (7,8) to the database. The method comprises regularly searching information items on the database (1) to locate items relevant to the search criteria, and then notifying at least the searcher (7,8) with details of the information items and of the information item provider (5,6).

## Description

The invention relates to a method and system for matching information items with search criteria.

There are many different situations in which information items are made available by providers and searchers wish to find that information. Commonly, intermediaries such as brokers are employed to match information item providers with searchers and a particular example of this is ship owners and operators who provide information about ship availability and ship charterers who wish to make use of ships for transporting cargo and the like.

Brokers are not able to become aware of all available ships or indeed all ship charterers and so potential matches are often missed or matches are made which are not the optimum available.

In accordance with one aspect of the present invention, a method of matching information items supplied by providers to a remote database with search criteria supplied by remote searchers to the database comprises regularly searching information items on the database to locate items relevant to the search criteria, and then notifying at least the searcher with details of the information items and of the information item provider.

In accordance with a second aspect of the present invention, an information item retrieval system comprises a database which can communicate with remote information item providers and remote searchers and is adapted to store information items; and a control system responsive to search criteria supplied by the remote searchers to locate information items relevant to the search criteria and to notify at least the searcher with details of the information items and of the information item provider.

With this invention, a remote database is provided which is in communication with information item providers and remote searchers and which itself regularly searches for matches. Thus, it does not rely on a searcher repeatedly instructing a search to be made but rather carries out those searches centrally and if a relevant match is found then notifies the searcher. In this way, the searcher does not have to repeatedly make contact with the remote database but can simply enter the search criteria once and then await details of a match maybe by return or possibly later in the same day or same week.

Once a searcher has received the information, he can then decide whether or not to make contact with the information item provider.

Typically, the method further comprises notifying the search provider of the degree of relevance each information item has to the search criteria. This enables the searcher to decide whether he is prepared to accept a less relevant match for his purposes. For example, in the case of a ship charterer, he may be prepared to accept a less preferred routing etc.

The regular search carried out by the database could be initiated in a variety of ways. For example, the search may be performed each time a new information item is added to the database or an existing information item is amended. Alternatively, the search may be performed each time new search criteria are supplied to the database. In a further alternative, the search may be performed at regular time intervals. Indeed, a combination of these is the most preferred approach.

Conveniently, the information item provider of a located information item is notified with details of the searcher. This then enables the information item provider to get in touch with the searcher which is particularly useful in the ship chartering application described above.

The notification of information to the searcher (and the information item provider) may be carried out in a variety of ways, for example by telephone etc., but is conveniently carried out by email. Furthermore, the notification of search criteria to the database could be achieved by email.

Conveniently, however, the searcher communicates with the remote database via the Internet. This allows him easy access to the database, for example via a suitable web site. In addition, the searcher could construct his search criteria off-line and then submit it on-line so reducing the amount of on-line time.

Information providers may contact the database via one or more web sites and typically there may be a separate web site for each type of information.

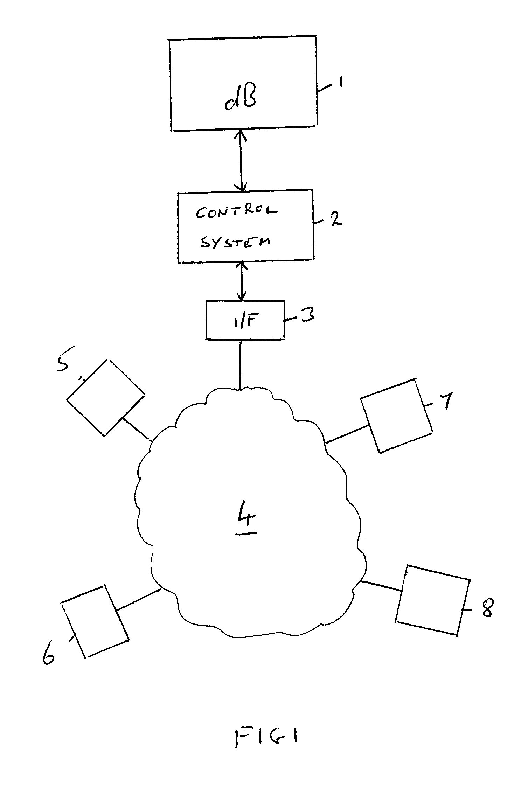

An example of a method and system according to the present invention will now be described with reference to the accompanying drawings, in which:-
Figure 1 is a block diagram of the system; and,
Figure 2 is a flow diagram illustrating operation of the system.

In this example, a ship chartering operation will be described although as mentioned above, the invention is applicable to many different types of application.

The system comprises a database 1 connected to a control system 2 which is able to extract data from the database 1 and store data in the database. The control system 2 is connected via an interface 3 with the Internet 4. The Internet 4 is, of course, available to many subscribers but in this example, just four subscribers 5-8 are illustrated. Subscribers 5 and 6 are ship operators/ owners while subscribers 7 and 8 are ship charterers.

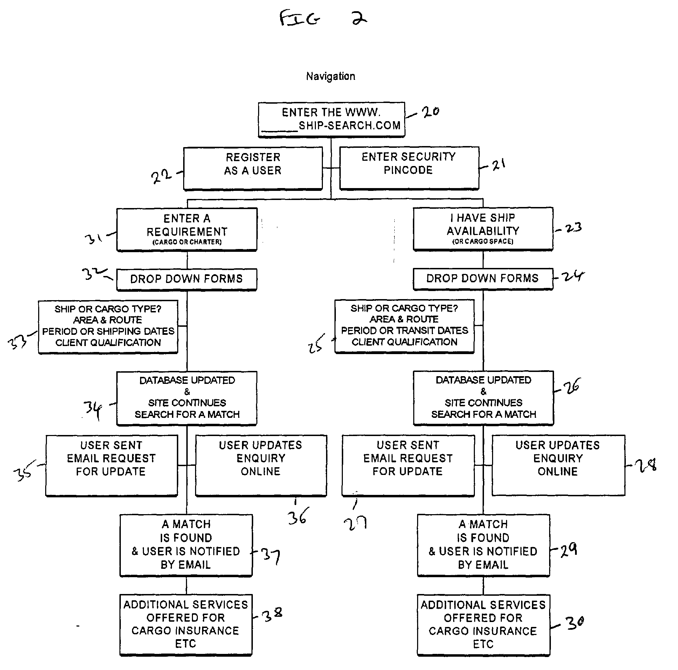

When a ship owner or operator 5,6 has a ship available to transport cargo, he makes contact via the Internet with a web site of the control system 2 (step 20, Figure 2) and in response, the web site will prompt him to enter a security PIN code (step 21). The ship operator/owner 5,6 will then indicate via the web site details about ship availability (step 23) by filling in suitable drop-down forms (step 24). The information supplied is set out in a box 25 and this can be presented in any suitable format.

After receiving the information, the control system 2 will update a suitable location within the database 1 and if there are any search criteria available, the control system will attempt to match the search criteria for each search subscriber (or ship charterer) with all information on the database 1 (step 26).

In addition, the control system 2 regularly sends an email to the ship owners/operators 5,6 requesting updated information (step 27) to which the user will respond (step 28).

If a reasonable number of the search criteria provided by a particular ship charterer 7,8 are found to be satisfied, that ship charterer will be provided with the appropriate information by email and an indication (for example a percentage) of its degree of relevance to the search criteria (step 29). In addition, the control system may provide information relating to additional services relevant to the information such as details of local insurance brokers and the like (step 30).

When a ship charterer wishes to charter a ship, he accesses the control system website (step 20) and registers his details (step 22). He then enters details of his requirements (step 31) using suitable drop-down forms (step 32). An example of a typical form is set out in Table 1 below.

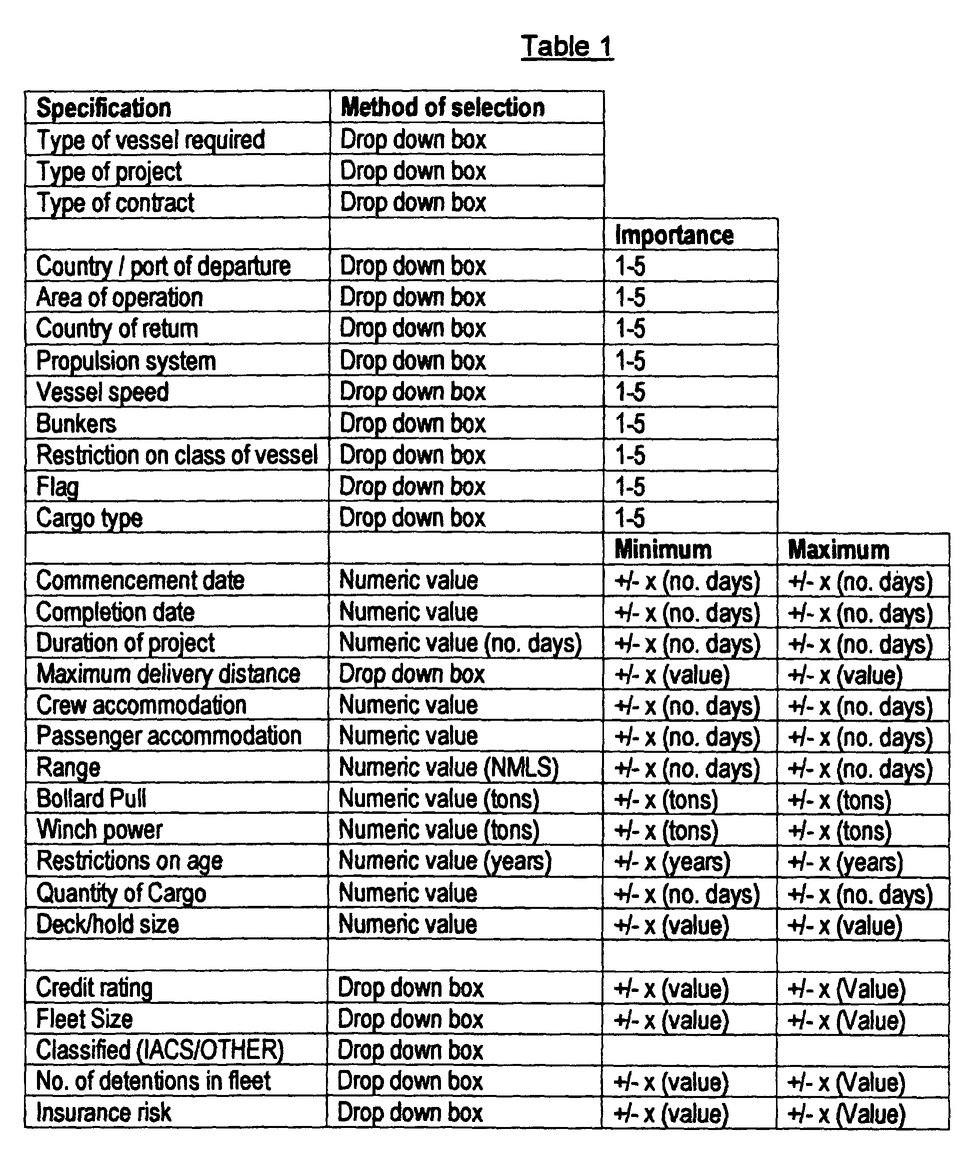

Every selection criteria with a numeric value will be completed with a minimum and maximum value. It will be described appropriately for each section. For example, for the commencement data the user will be asked to complete the earliest commencement date, and the latest commencement date. Within each of these sections an option of All/Any/ Not Important can be entered.

For items that are selected from a drop-down box, the user will rate the importance of these criteria, ranging from 1-5 where 1 is vital and 5 not important.

Distance from the ports of delivery/re-delivery will probably be critical and therefore a field will be available for the user to specify the maximum distance that would be acceptable away from the preferred port of delivery. The software will then discern the actual distances between the ports or places on the requirements and the availability by the use of marine distance tables (detailing over 4000 ports worldwide and 40 million conceivable distances) and calculate a match. The information in the forms is summarized briefly in box 33.

The control system 2 updates the database and immediately initiates a search using the entered search criteria (step 34).

In addition, at regular intervals, the control system 2 will send an email request to ship charterers (step 35) requesting details of any updates to their search criteria and in response those updates will be sent on-line (step 36).

If an information item relevant to the search criteria is found, the control system 2 will send an email to the ship charterer 5,6 (step 37) optionally together with information relating to additional services (step 38) as in step 30.

It will be understood that steps 29, 30, 37 and 38 are carried out together so that both the ship charterer and ship owner/operator are simultaneously notified of the match.

In some cases, the operation of the system can be refined by providing a range of web sites corresponding to different types of information item. For example, in the case of ship chartering, separate web sites relating to cruise ships, cable ships, cargo ships, container ships, survey ships and the like could be provided. A ship charterer will then be directed to that particular web site as will relevant ship owners/operators. This will then limit the volume of the search and increase its speed.

## Claims

1. A method of matching information items supplied by providers to a remote database with search criteria supplied by remote searchers to the database, the method comprising regularly searching information items on the database to locate items relevant to the search criteria, and then notifying at least the searcher with details of the information items and of the information item provider.

2. A method according to claim 1, further comprising notifying the search provider of the degree of relevance each information item has to the search criteria.

3. A method according to claim 1 or claim 2, wherein the search is performed each time a new information item is added to the database or an existing information item is amended.

4. A method according to any of the preceding claims, wherein a search is performed each time new search criteria are supplied to the database.

5. A method according to any of the preceding claims, wherein a search is performed at regular time intervals.

6. A method according to any of the preceding claims, wherein the information item provider of a located information item is notified with details of the searcher.

7. A method according to any of the preceding claims, wherein the or each notification is carried out by email.

8. A method according to any of the preceding claims, wherein at least the searcher communicates with the remote database via the Internet.

9. A method according to claim 8, further comprising providing one or more web sites to enable information items to be supplied to the database.

10. A method according to claim 9, wherein a web site is provided for each type of information item.

11. A method according to any of claims 8 to 10, further comprising providing one or more web sites to enable search criteria to be supplied to the database.

12. A method according to any of the preceding claims, wherein the information items relate to ships provided by ship owners or operators.

13. An information item retrieval system comprising a database which can communicate with remote information item providers and remote searchers and is adapted to store information items; and a control system responsive to search criteria supplied by the remote searchers to locate information items relevant to the search criteria and to notify at least the searcher with details of the information items and of the information item provider.
